# EUROPÄISCHE PATENTSCHRIFT

(11) **EP 3 507 518 B1**
(45) Veröffentlichungstag und Bekanntmachung des Hinweises auf die Patenterteilung: **24.02.2021**
(21) Anmeldenummer: 17735504.7
(22) Anmeldetag: 04.07.2017
(51) Int. Cl.: F16D 25/12, F16D 25/10, F16D 21/06, B60K 6/387, B60W 10/02

(54) **MEHRFACH-KUPPLUNG FÜR EIN KRAFTFAHRZEUG, INSBESONDERE FÜR EINEN HYBRIDANTRIEB EINES KRAFTFAHRZEUGS**
MULTIPLE CLUTCH FOR A MOTOR VEHICLE, PARTICULARLY FOR A HYBRID DRIVE OF A MOTOR VEHICLE
EMBRAYAGE MULTIPLE POUR UN VÉHICULE AUTOMOBILE, EN PARTICULIER POUR UNE PROPULSION HYBRIDE D'UN VÉHICULE AUTOMOBILE

(30) Priorität: 05.09.2016 DE 102016216722
(43) Veröffentlichungstag der Anmeldung: 10.07.2019
(73) Patentinhaber: Volkswagen Aktiengesellschaft, 38440 Wolfsburg (DE)
(72) Erfinder: FRIEDRICH, Armin, 34560 Fritzlar (DE); BOSSHAMMER, Jens, 34632 Jesberg (DE); RUBIS, Severin, 58455 Witten (DE); WAGNER, Waldemar, 34225 Baunatal (DE)
(86) Internationale Anmeldenummer: PCT/EP2017/066651
(87) Internationale Veröffentlichungsnummer: WO 2018/041443

(56) Entgegenhaltungen:
- EP-A1- 1 568 906
- WO-A1-2017/156358
- DE-A1-102007 003 107
- DE-A1-102008 041 887
- DE-A1-102008 052 257
- DE-A1-102010 003 442
- DE-A1-102014 204 970

## Beschreibung

Die Erfindung betrifft eine Mehrfach-Kupplung für ein Kraftfahrzeug, insbesondere für einen Hybridantrieb eines Kraftfahrzeuges gemäß den Merkmalen des Oberbegriffes des Patentanspruches 1.

Mehrfach-Kupplungen für Kraftfahrzeuge, insbesondere auch für Hybridantriebe von Kraftfahrzeugen sind in einer Vielzahl im Stand der Technik bereits bekannt.

Im Allgemeinen weisen derartige Mehrfach-Kupplungen eine erste, eine zweite und eine dritte Trennkupplung auf, die insbesondere als Reib-Lamellen-Kupplungen ausgebildet sind. Hierbei ist die erste Trennkupplung zur Kopplung oder Entkopplung einer - ersten - Getriebeeingangswelle mit einem Antrieb, insbesondere mit einer Verbrennungskraftmaschine und/oder mit einer Elektromaschine vorgesehen. Insbesondere bei Doppelkupplungsgetrieben ist dann eine zweite Trennkupplung vorgesehen, die zur Kopplung oder zur Entkopplung der dann vorgesehenen zweiten Getriebeeingangswelle mit einem Antrieb, insbesondere mit einer Verbrennungskraftmaschine oder mit einer Elektromaschine, vorgesehen ist. Hierbei sind die erste und die zweite Trennkupplung im Wesentlichen jeweils als eine Lamellenkupplung ausgebildet und weisen einen Innen- und Außenlamellenträger bzw. entsprechende Innen-und Außenlamellen auf. Schließlich dient die dritte Trennkupplung zur Kopplung oder zur Entkopplung des Außenlamellenträgers der ersten und zweiten Trennkupplung mit einem Antrieb, insbesondere mit einer Verbrennungskraftmaschine und/oder mit einer Elektromaschine, bzw. ist die dritte Trennkupplung, die auch als sogenannte "K0-Kupplung" bezeichenbar ist, insbesondere zur Auswahl des auf die erste oder zweite Trennkupplung wirkenden Antriebs, insbesondere zur Realisierung des Verbrennungskraftmaschinenantriebs vorgesehen.

So ist aus der DE 10 2011 120 809 A1 ein Mehrfach-Kupplungssystem bekannt, das eine erste, zweite und dritte Trennkupplung aufweist, wobei die erste und die zweite Trennkupplung jeweils einen separaten Innen- und Außenlamellenträger aufweisen. Weiterhin weist dieses Mehrfach-Kupplungssystem zur Kühlung der drei Trennkupplungen ein entsprechendes Kühlölsystem auf. Das Kühlölsystem ist so ausgeführt, dass zunächst eine gemeinsame Kühlölzuführung sich im weiteren Verlauf dann in eine ersten und in eine zweiten Strömungspfad aufteilt, wobei der erste Strömungspfad die erste und die zweite Trennkupplung und der zweite Strömungspfad die dritte Trennkupplung entsprechend mit Kühlöl versorgt. Vorzugsweise eignet sich das hier beschriebene Mehrfach-Kupplungssystem für ein Doppelkupplungsgetriebe bzw. ist im Wesentlichen insbesondere als Doppelkupplung mit einer ersten und zweiten Trennkupplung bzw. einer angliederten dritten Trennkupplung (K0-Kupplung) ausgeführt.

Weiterhin ist aus der DE 11 2007 002 842 T5 eine Mehrfach-Kupplung für ein Kraftfahrzeug bekannt, wobei die insbesondere als Doppelkupplung ausgeführte Mehrfach-Kupplung, nämlich hier die erste und zweite Trennkupplung einen Innen- und Außenlamellenträger aufweisen. Hierbei ist der Außenlamellenträger der ersten Kupplung zugleich als Innenlamellenträger der zweiten Trennkupplung ausgebildet. Schließlich ist auch ein Kühlölsystem vorgesehen, wobei über zwei getrennt voneinander vorgesehene Zuführungskanäle einerseits die erste Trennkupplung, andererseits die zweite Trennkupplung mit Kühlöl versorgbar ist.

Schließlich ist aus der DE 10 2010 003 442 A1 eine Mehrfach-Kupplung für ein Kraftfahrzeug bekannt, wo eine erste, eine zweite und eine dritte Trennkupplung einen Außenlamellenträger aufweisen und der Außenlamellenträger der ersten, der zweiten und der dritten Trennkupplung als ein gemeinsamer Außenlamellenträger ausgebildet ist. Zumindest zwei der hier vorgesehenen bzw. vorhandenen Trennkupplungen sind radial beabstandet voneinander bzw. radial beabstandet zueinander angeordnet. Der gesamte Aufbau dieser Mehrfach-Kupplung ist komplex und aufwendig.

Die im Stand der Technik bekannten Mehrfach-Kupplungen bzw. Mehrfach-Kupplungssysteme sind noch nicht optimal ausgebildet. Einerseits ist der Konstruktions-und Montageaufwand für die bekannten Mehrfach-Kupplungen erhöht, insbesondere müssen teils für die erste und zweite Trennkupplung sowie auch für die dritte Trennkupplung unterschiedliche Lamellen, insbesondere unterschiedlich ausgebildete und/oder unterschiedlich dimensionierte Reiblamellen hergestellt werden, die auch in mehreren Montageschritten entsprechend angeordnet bzw. positioniert werden müssen. Dies führt zu einem hohen Kostenaufwand. Weiterhin sind die Kühlölsysteme bei den bereits bekannten Mehrfach-Kupplungen bzw. Mehrfach-Kupplungssystemen noch nicht optimal. Aufgrund der komplexen räumlichen Anordnungen der jeweiligen Innen- und Außenlamellenträger der ersten, zweiten und dritten Trennkupplung müssen teils komplexe Kühlölkanäle ausgebildet bzw. realisiert werden, was wiederum die Herstellungskosten entsprechend erhöht.

Der Erfindung liegt daher die Aufgabe zugrunde die eingangs genannte Mehrfach-Kupplung nun derart auszugestalten und weiterzubilden, dass der Konstruktions- und Montageaufwand und insbesondere die damit im Zusammenhang stehenden Kosten verringert sind, insbesondere auch die Realisierung eines Kühlölsystems vereinfacht ist.

Die zuvor aufgezeigte Aufgabe ist nun für die eingangs genannte Mehrfach-Kupplung zunächst durch die Merkmale des Patentanspruches 1 gelöst.

Zunächst ist die dritte Trennkupplung als Lamellenkupplung ausgebildet und weist einen Innen- und einen Außenlamellenträger auf, wobei nun aber der Außenlamellenträger der ersten, der zweiten und der dritten Trennkupplung als ein gemeinsamer Außenlamellenträger zur Aufnahme, Lagerung und/oder Führung der Außenlamellen der ersten, zweiten und dritten Trennkupplung ausgebildet ist. Anders ausgedrückt, es ist nur ein Außenlamellenträger, nämlich ein gemeinsamer Außenlamellenträger für die erste, zweit und dritte Trennkupplung vorgesehen. Hierdurch sind nun mehrere Vorteile realisierbar. Insbesondere weist der gemeinsame Außenlamellenträger eine durchgängige Verzahnung auf, nämlich insbesondere am Innenumfang im Wesentlichen über die axiale Länge des Außenlamellenträgers durchgehende Axialnuten. Hierdurch bedingt ist der Montageaufwand zur Anordnung der Außenlamellen erheblich verringert bzw. vereinfacht, nämlich die entsprechenden Außenlamellen der ersten, zweiten und dritten Trennkupplung können jeweils sequenziell hintereinander in die Axialnuten des gemeinsamen Außenlamellenträger eingeschoben und an den entsprechenden Stellen, wie gewünscht, positioniert werden.

Durch die Ausbildung der ersten, zweiten und dritten Trennkupplung mit einem gemeinsamen Außenlamellenträger können insbesondere die Außenlamellen, insbesondere Außenlamellen aus Stahl der ersten, zweiten und dritten Trennkupplung im Wesentlichen gleich ausgebildet und/oder gleich dimensioniert werden. Der Herstellungsaufwand und die Herstellungskosten sind erheblich verringert.

Die erste, zweite und dritte Trennkupplung weisen jeweils einen separaten Innenlamellenträger auf, wobei aber nun die Verzahnungen der jeweiligen Innenlamellenträger im Wesentlichen gleich ausgebildet und/oder gleich dimensioniert sind. Hierdurch bedingt können nun im Wesentlichen auch die Innenlamellen, insbesondere Belaglamellen der ersten, zweiten und dritten Trennkupplung gleich ausgebildet und/oder gleich dimensioniert werden. Auch hierdurch sind daher der Herstellungsaufwand und die damit verbundenen Kosten erheblich verringert.

Zwischen den einzelnen Lamellen der jeweiligen Trennkupplung, insbesondere zwischen den Außenlamellen der ersten, zweiten und/oder dritten Trennkupplung sind Federelemente vorgesehen, insbesondere um im unbelasteten Zustand der jeweiligen Trennkupplung die Innen- und Außenlamellen dieser jeweiligen Trennkupplung voneinander weg zu bewegen bzw. ein mögliches Schleppmoment zu minimieren. Aufgrund der Ausbildung und/oder der Anordnung der Außenlamellen in einem gemeinsamen Außenlamellenträger können nun auch die Federelemente der ersten, zweiten und/oder dritten Trennkupplung im Wesentlichen gleich ausgebildet und/oder gleich dimensioniert werden. Hierdurch sind wiederum der Montage- und Herstellungsaufwand und die damit verbundenen Kosten entsprechend verringert.

Insbesondere ist für jede Trennkupplung, also für die erste, zweite und dritte Trennkupplung eine Kühlölzuführung vorgesehen, insbesondere für jede Trennkupplung eine separate Kühlölzuführung vorgesehen bzw. realisiert. Aufgrund der im Wesentlichen sequenziell hintereinander bzw. parallel angeordneten Innen- und Außenlamellen der ersten, zweiten und dritten Trennkupplung und der im Wesentlichen koaxial zu den Innen-und Außenlamellen angeordneten ersten und zweiten Getriebeeingangswelle bzw. der koaxial angeordneten Antriebswelle eines Verbrennungsmotors, was im Folgenden noch näher erläutert werden wird, ist die Ausbildung von Kühlölkanälen, die im Wesentlichen innerhalb der jeweiligen Getriebeeingangswelle verlaufen sehr kostengünstig herstellbar.

Aufgrund der Anordnung der ersten, zweiten und dritten Trennkupplung, die im Wesentlichen hintereinander liegend angeordnet sind, wobei die mittlere Trennkupplung, insbesondere die erste Trennkupplung durch einen Betätigungskolben betätigbar ist, der zumindest teilweise innerhalb des Innenlamellenträgers einer benachbarten Trennkupplung, insbesondere der zweiten Trennkupplung gelagert und/oder geführt ist, kann der erforderliche Bauraum entsprechend minimiert werden.

Bei der entsprechend oben angesprochenen Anordnung des Betätigungskolbens, weist der Betätigungskolben eine "Doppellagerung" auf, so dass eine auf den Betätigungskolben durch die erste und zweite Trennkupplung einwirkende Drehbewegung voneinander entkoppelt sind. Dadurch ist eine axiale Verschiebung des Betätigungskolbens mit einem geringen Kraftaufwand ermöglicht bzw. gewährleistet, was wiederum die Betätigung des Betätigungskolbens entsprechend vereinfacht.

Insbesondere ist der gemeinsame Außenlamellenträger der ersten, zweiten und dritten Trennkupplung als ein Rotorträger ausgebildet und mit dem Rotor einer Elektromaschine wirksam verbindbar oder verbunden. Die so ausgebildete Mehrfach-Kupplung lässt sich daher im Wesentlichen "im Inneren" einer Elektromaschine anordnen, insbesondere auch aufgrund des zuvor oben beschriebenen geringen Bauraumbedarfs.

Insbesondere wird die Antriebswelle einer Verbrennungskraftmaschine mit dem Innenlamellenträger der dritten Trennkupplung, der sogenannten "K0-Kupplung" wirksam verbunden oder ist hiermit entsprechend wirksam verbindbar. Die dritte Trennkupplung bzw. die "K0-Kupplung" verbindet daher den gemeinsamen Außenlamellenträger insbesondere drehwirksam mit der Antriebswelle einer Verbrennungskraftmaschine oder entkoppelt den gemeinsamen Außenlamellenträger von dieser Antriebswelle.

Eine einfache Ansteuerung der Betätigung der ersten, zweiten und dritten Trennkupplung ist dadurch gewährleistet, dass die erste und zweite Trennkupplung insbesondere durch einen jeweiligen Betätigungskolben von der einen Seite (Stirnseite) des Außenlamellenträgers her und die dritte Trennkupplung (K0-Kupplung) durch einen Betätigungskolben von der anderen Seite (Stirnseite) des Außenlamellenträgers her betätigbar ist bzw. die entsprechenden jeweiligen Komponenten an der einen oder anderen Stirnseite lagerbar und/oder anordenbar sind.

Im Ergebnis sind die eingangs genannten Nachteile vermieden und entsprechende Vorteile sind erzielt.

Es gibt nun eine Vielzahl von Möglichkeiten, die erfindungsgemäße Mehrfach-Kupplung für ein Kraftfahrzeug in vorteilhafter Art und Weise auszugestalten und weiterzubilden. Hierfür darf zunächst auf die dem Patentanspruch 1 nachgeordneten Patentansprüche verwiesen werden. Im Folgenden dürfen mehrere bevorzugte Ausgestaltungen der Erfindung anhand der Zeichnung und der dazugehörigen Beschreibung näher erläutert werden. In der Zeichnung zeigt:
- Fig. 1: eine Ausführungsform einer Mehrfach-Kupplung in einer vereinfachten schematischen Darstellung, teilweise geschnitten, mit Darstellung der wesentlichen Komponenten, und
- Fig. 2: eine Ausführungsform einer erfindungsgemäßen Mehrfach-Kupplung in einer vereinfachten schematischen Darstellung, teilweise geschnitten, mit Darstellung der wesentlichen Komponenten.

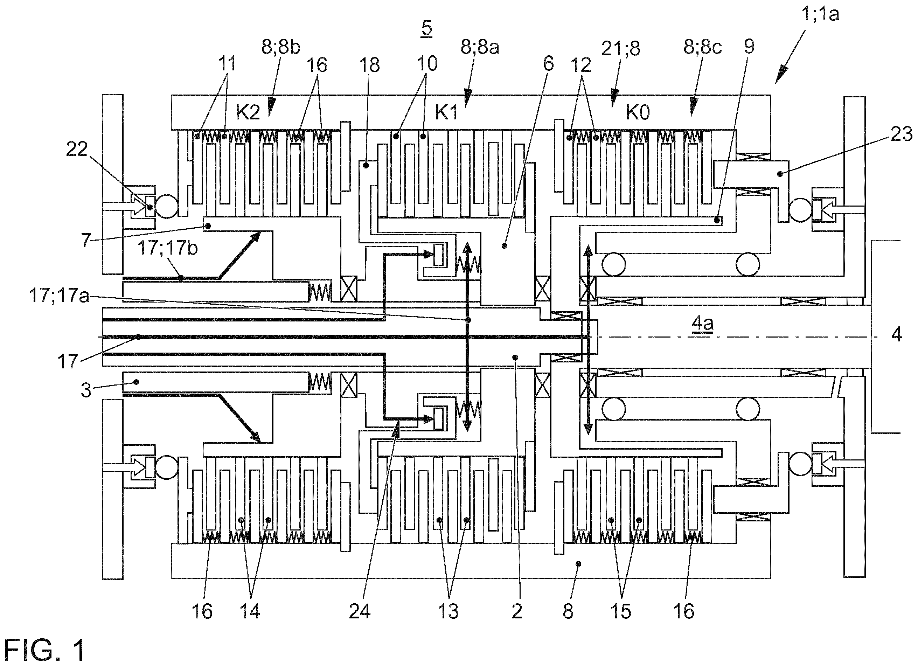

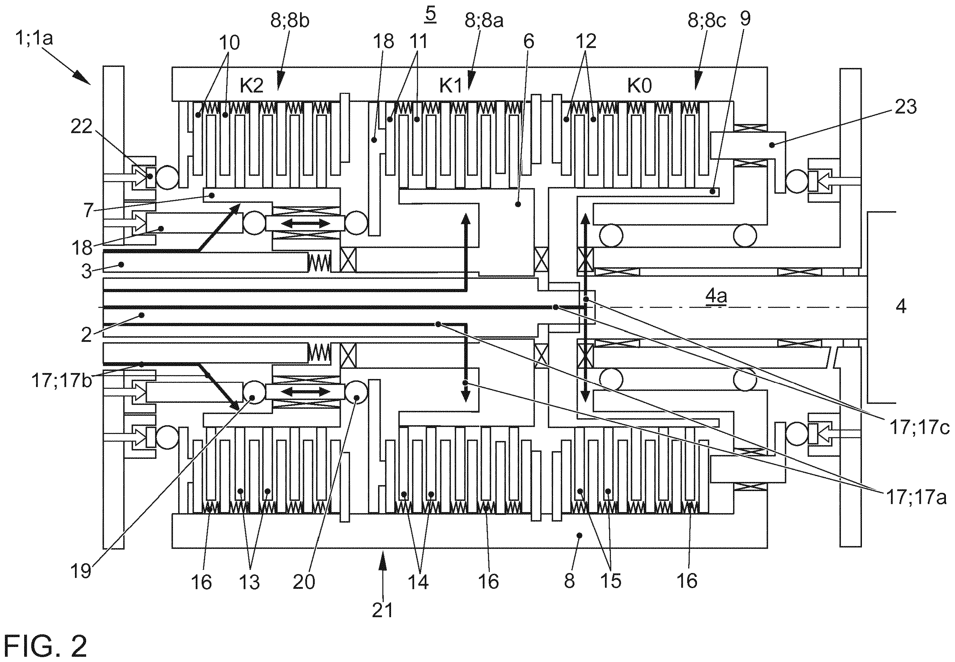

Die Fig. 1 und 2 zeigen zumindest teilweise schematisch im Schnitt eine Mehrfach-Kupplung 1 für ein im Wesentlichen nicht näher dargestelltes Kraftfahrzeug, insbesondere für einen Hybridantrieb eines nicht näher dargestellten Kraftfahrzeuges. Die folgenden Ausführungen beziehen sich grundsätzlich auf beide in den Fig. 1 und 2 dargestellten Ausführungsformen.

Die Mehrfach-Kupplung 1 weist mindestens eine erste Trennkupplung K1, eine zweite Trennkupplung K2 und eine dritte Trennkupplung K0 auf. Die erste, zweite und dritte Trennkupplung K1, K2 und K0 sind insbesondere als Lamellenkupplungen bzw. als Reibkupplungen ausgebildet.

Die hier dargestellte Mehrfach-Kupplung 1 ist insbesondere als Doppelkupplung 1a mit einer angliederten sogenannten "K0-Kupplung" als dritte Trennkupplung ausgebildet bzw. ausgeführt. Die hier dargestellte Mehrfach-Kupplung 1 bzw. dargestellte Doppelkupplung 1a mit angegliederter "K0-Kupplung" dient insbesondere zur Ansteuerung der beiden Getriebeeingangswellen 2 bzw. 3 eines nicht im einzelnen dargestellten Doppelkupplungsgetriebes, nämlich einer ersten Getriebeeingangswelle 2 und einer zweiten Getriebeeingangswelle 3.

Die erste Trennkupplung K1 ist zur Kopplung und/oder Entkopplung der ersten Getriebeeingangswelle 2 mit einem Antrieb 4 bzw. 5, insbesondere nämlich mit einer Verbrennungskraftmaschine 4 und/oder mit einer Elektromaschine 5 vorgesehen. Die Verbrennungskraftmaschine 4 und die Elektromaschine 5 sind hier nur im Wesentlichen nur grob schematisch dargestellt bzw. grob angedeutet.

Die zweite Trennkupplung K2 ist zur Kopplung oder Entkopplung der zweiten Getriebeeingangswelle 3 mit einem Antrieb 4 bzw. 5, insbesondere nämlich mit der bereits zuvor genannten Verbrennungskraftmaschine 4 und/oder mit der bereits zuvor genannten Elektromaschine 5 vorgesehen.

Die erste und zweite Trennkupplung K1 und K2 sind jeweils als Lamellenkupplung ausgeführt und weisen jeweils einen Innenlamellenträger 6 bzw. 7 und einen Außenlamellenträger 8a bzw. 8b auf.

Die dritte Trennkupplung K0, die insbesondere auch als sogenannte "K0-Kupplung" bezeichenbar ist, ist zur Kopplung oder Entkopplung des Außenlamellenträgers 8a bzw. 8b der ersten und zweiten Trennkupplung K1 und K2 mit dem Antrieb 4 bzw. 5, hier insbesondere nämlich zur Kopplung oder Entkopplung mit der Verbrennungskraftmaschine 4 vorgesehen.

Die dritte Trennkupplung K0 ist als Lamellenkupplung ausgebildet und weist einen Innenlamellenträger 9 und einen Außenlamellenträger 8c auf, wobei nun der Außenlamellenträger 8a, 8b und 8c der ersten, zweiten und dritten Trennkupplung K1, K2 und K0 als ein gemeinsamer Außenlamellenträger 8 zur Aufnahme, Lagerung, Kraftübertragung und/oder Führung der Außenlamellen 10, 11 und 12 der ersten, zweiten und dritten Trennkupplung K1, K2, K0 ausgebildet ist.

Durch die Ausbildung eines gemeinsamen Außenlamellenträgers 8, der insbesondere entsprechende jeweilige Bereiche "8a, 8b und 8c" aufweist, die dann - quasi - als Außenlamellenträger-Bereiche für die Außenlamellen 10, 11 und 12 der jeweiligen ersten, zweiten und dritten Trennkupplung K1, K2 und K0 dienen, werden entscheidende Vorteile erzielt bzw. realisiert, so dass der Konstruktions- und Montageaufwand und die damit verbundenen Kosten entsprechend verringert sind.

Zunächst weist der gemeinsame Außenlamellenträger 8 eine durchgängige, hier nicht im einzelnen dargestellte Verzahnung auf, die insbesondere am Innenumfang des gemeinsamen Außenlamellenträgers 8 im Wesentlichen über die gesamte axiale Länge des Außenlamellenträgers 8 ausgebildet ist bzw. im wesentlichen durchgehende Axialnuten aufweist. Hierdurch bedingt können die Außenlamellen 10, 11 und 12 im Wesentlichen von einer Seite einzeln sequenziell nacheinander in den gemeinsamen Außenlamellenträger 8 eingeschoben und dort aufgenommen und/oder positioniert werden. Hierbei können die Außenlamellen 10, 11 und 12 der ersten, zweiten und dritten Trennkupplung K1, K2 und K0 im Wesentlichen gleich ausgebildet und/oder gleich dimensioniert ausgeführt werden. Insbesondere können die Außenlamellen 10, 11 und 12 als identische Stahllamellen ausgebildet werden, so dass der Herstellungsprozess für die Herstellung der Außenlamellen 10, 11 und 12 vereinheitlicht, insbesondere damit vereinfacht und kostengünstig optimiert ist.

Weiterhin weisen die erste, zweite und dritte Trennkupplung K1, K2 und K0 jeweils einen separaten Innenlamellenträger 6, 7 und 9 auf. Die hier nicht dargestellten Verzahnungen der Innenlamellenträger 6, 7 und 9 sind im Wesentlichen gleich ausgebildet und/oder gleich dimensioniert, so dass im Wesentlichen auch die jeweiligen Innenlamellen 13, 14 und 15 der ersten, zweiten und dritten Trennkupplung K1, K2 und K0 im Wesentlichen gleich ausgebildet und/oder gleich dimensioniert ausgeführt sind. Insbesondere sind die Innenlamellen 13, 14 und 15 als identisch ausgebildete Belaglamellen ausgebildet. Auch hierdurch ist der Herstellungsprozess optimiert, vereinfacht bzw. entsprechend kostengünstig optimiert.

Wie insbesondere aus den Fig. 1 und 2 ersichtlich ist, weisen die erste, zweite und dritte Kupplung K1, K2 und K0 jeweils entsprechende Außenlamellen 10, 11 und 12 bzw. jeweilige Innenlamellen 13, 14 und 15 auf. Zwischen den Lamellen (10, 11, 12 bzw. 13, 14, 15), insbesondere zwischen den Außenlamellen 10, 11 und 12 der ersten, zweiten und/oder dritten Trennkupplung K1, K2 und K0 sind nun Federelemente 16 vorgesehen, die in den Fig. 1 und 2 im Wesentlichen in der Nähe des Außendurchmessers der Außenlamellen 10, 11, 12, insbesondere der Stahllamellen angeordnet sind, sowie ersichtlich. Hierbei sind die Federelemente 16 der ersten, zweiten und/oder Trennkupplung K1, K2 bzw. K0 im Wesentlichen gleich ausgebildet und/oder gleich dimensioniert. Insbesondere wird dies durch die gleiche Ausbildung und/oder Dimensionierung der jeweiligen Außenlamellen 10, 11 und 12 bzw. Innenlamellen 13, 14 und 15 der Trennkupplungen K1, K2 und K0 sowie durch den gemeinsamen Außenlamellenträger 8 realisiert bzw. erzielt.

Die zuvor beschriebenen Ausführungen gelten im Wesentlichen für die in den Fig. 1 und 2 dargestellten Ausführungsformen.

Weiterhin gilt im Wesentlichen für die in den Fig. 1 und 2 gezeigten Ausführungsformen, dass insbesondere für jede Trennkupplung, nämlich für die erste, zweite und dritte Trennkupplung K1, K2 und K0 eine Kühlölzuführung 17 vorgesehen ist. Insbesondere kann für jede Trennkupplung K1, K2 und K0 eine separate ausgebildete Kühlölzuführung 17a, 17b und 17c vorgesehen bzw. realisiert sein, so wie in Fig. 2 gezeigt.

Hierbei ist in Fig. 2 ist eine erste separate Kühlölzuführung 17a über entsprechende nicht näher bezeichnete Kühlölkanäle für die erste Trennkupplung K1 bzw. eine zweite separate Kühlölzuführung 17b über nicht näher bezeichnete Kühlölkanäle für die zweite Trennkupplung K2 vorgesehen. Hierbei ist die erste separate Kühlölzuführung 17a im Wesentlichen innerhalb der ersten Getriebeeingangswelle 2 und die zweite separate Kühlölzuführung 17b im Wesentlichen innerhalb bzw. angrenzend an die zweite Getriebeeingangswelle 3 vorgesehen bzw. ausgebildet. Bei der in Fig. 2 dargestellten Ausführungsform ist eine dritte separate Kühlölzuführung 17c für die dritte Trennkupplung K0 entsprechend vorgesehen bzw. ausgebildet, insbesondere hierfür auch ein innerhalb der ersten Getriebeeingangswelle 2 vorgesehener, nicht näher bezeichneter Kühlölkanal ausgebildet. Hingegen ist bei der in Fig. 1 dargestellten Ausführungsform zwar auch für die dritte Trennkupplung K0 eine Kühlölzuführung 17 realisiert, diese ist jedoch als ein "geteilter Kühlölstrom" der ersten separaten Kühlölzuführung 17a für die erste Trennkupplung K1 ausgebildet. Die Größe eines geteilten Kühlölstromes lässt sich auch über möglicherweise vorgesehene Blenden steuern. Die in Fig. 1 gezeigte Ausführungsform weist daher eine Kühlölzuführung 17 mit im Wesentlichen zwei separaten Kühlölzuführungen 17a und 17b auf, wobei die erste separate Kühlölzuführung 17a die erste und dritte Trennkupplung K1 und K0 versorgt und die zweite separate Kühlölzuführung 17b die zweite Trennkupplung K2 versorgt. Hingegen wird bei der in Fig. 2 gezeigten Ausführungsform jede der Trennkupplungen K1, K2 und K0 durch eine jeweilige separate Kühlölzuführung 17a, 17b und 17c versorgt, so wie dargestellt bzw. ersichtlich.

Wie die Fig. 1 und 2 zeigen sind die erste, zweite und dritte Trennkupplung K1, K2 und K0 im Wesentlichen hintereinander liegend angeordnet, wobei bei der in Fig. 2 dargestellten Ausführungsform die mittlere Trennkupplung, insbesondere die erste Trennkupplung K1 durch einen Betätigungskolben 18 betätigbar ist, der zumindest teilweise innerhalb des Innenlamellenträgers 7 einer benachbarten Trennkupplung, insbesondere der zweiten Trennkupplung K2 gelagert und/oder geführt ist. Diese Ausführungsform ist in Fig. 2 dargestellt. Bei der in Fig. 2 dargestellten bevorzugten Ausführungsform weist der hier innerhalb des Innenlamellenträgers 7 der zweiten Trennkupplung K2 gelagerte Betätigungskolben 18 eine "Doppellagerung" auf, insbesondere ein erstes und zweites Lager 19 und 20, so dass mit Hilfe des ersten und zweiten Lagers 19 und 20 eine auf dem Betätigungskolben 18 durch die erste und die zweite Trennkupplung K1 und K2 einwirkende Drehbewegung voneinander entsprechend entkoppelt sind. Hierdurch bedingt kann der Betätigungskolben 18 axial, insbesondere leicht axial verschoben werden, so dass eine einfache und konstruktiv kostengünstige Lagerung und/oder Betätigung des Betätigungskolbens 18 innerhalb des Innenlamellenträgers 7 ermöglicht ist.

Wie die Fig. 1 und 2 weiter zeigen ist der gemeinsame Außenlamellenträger 8 insbesondere auch als ein Rotorträger 21 ausgebildet und mit dem nicht näher dargestellten Rotor einer nur schematisch angedeuteten Elektromaschine 5 wirksam verbunden oder verbindbar. Anders ausgedrückt, die Elektromaschine 5 kann ein entsprechendes Drehmoment auf den gemeinsamen Außenlamellenträger 8 bzw. den so ausgebildeten Rotorträger 21 mit Hilfe des hier nicht im einzelnen dargestellten Rotors der Elektromaschine 5 aufbringen bzw. ein entsprechendes wirksames Drehmoment auf den gemeinsamen Außenlamellenträger 8 übertragen. Weiterhin ist eine Antriebswelle 4a einer hier nur schematisch dargestellten Verbrennungskraftmaschine 4 mit dem Innenlamellenträger 9 der dritten Trennkupplung K0 wirksam verbunden oder verbindbar. Dies ist in den Fig. 1 und 2 im Wesentlichen auf der rechten Seite ersichtlich dargestellt, wo im Wesentlichen die Antriebswelle 4a der Verbrennungskraftmaschine 4 ersichtlich ist bzw. wirksam mit dem Innenlamellenträger 9 der dritten Trennkupplung K0 verbunden ist. Bei den hier in den Fig. 1 und 2 dargestellten Ausführungsformen koppelt bzw. entkoppelt daher die dritte Trennkupplung K0 den gemeinsamen Außenlamellenträger 8 mit der Antriebswelle 4a der Verbrennungskraftmaschine 4.

Weiterhin ist aus den Fig. 1 und 2 ersichtlich, dass die erste und zweite Trennkupplung K1 und K2 durch einen jeweiligen Betätigungskolben, bei Fig. 2 durch die Betätigungskolben 18 und 22 insbesondere von der einen Seite des Außenlamellenträgers 8 und die dritte Trennkupplung K0 durch einen Betätigungskolben 23 von der anderen Seite des Außenlamellenträgers 8 betätigbar ist. So wird bei der in Fig. 1 dargestellten Ausführungsform der Betätigungskolben 18 der ersten Trennkupplung K1 hier im Wesentlichen im inneren Bereich liegend "betätigt", nämlich im Wesentlichen über das hier vorgesehene separate Hydraulik-Drucksystem 24, das mit Hilfe von entsprechenden Kanälen in der ersten Getriebeeingangswelle 2 ausgebildet ist.

### Bezugszeichenliste

- 1: Mehrfach-Kupplung
- 1a: Doppelkupplung
- 2: erste Getriebeeingangswelle
- 3: zweite Getriebeeingangswelle
- 4: Verbrennungskraftmaschine
- 4a: Antriebswelle
- 5: Elektromaschine
- 6: Innenlamellenträger
- 7: Innenlamellenträger
- 8: gemeinsamer Außenlamellenträger
- 8a: Außenlamellenträger bzw. Außenlamellenträgerbereich für Trennkupplung K1
- 8b: Außenlamellenträger bzw. Außenlamellenträgerbereich für Trennkupplung K2
- 8c: Außenlamellenträger bzw. Außenlamellenträgerbereich für Trennkupplung K0
- 9: Innenlamellenträger
- 10: Außenlamellen
- 11: Außenlamellen
- 12: Außenlamellen
- 13: Innenlamellen
- 14: Innenlamellen
- 15: Innenlamellen
- 16: Federelemente
- 17: Kühlölzuführung
- 17a: erste Kühlölzuführung
- 17b: zweite Kühlölzuführung
- 17c: dritte Kühlölzuführung
- 18: Betätigungskolben
- 19: erstes Lager
- 20: zweites Lager
- 21: Rotorträger
- 22: Betätigungskolben
- 23: Betätigungskolben
- 24: Hydraulik-Drucksystem
- K1: erste Trennkupplung
- K2: zweite Trennkupplung

## Patentansprüche

1. Mehrfach-Kupplung (1) für ein Kraftfahrzeug, insbesondere für einen Hybridantrieb eines Kraftfahrzeuges, mit mindestens einer ersten, einer zweiten und einer dritten Trennkupplung (K1, K2, K0), wobei die erste Trennkupplung (K1) zur Kopplung oder Entkopplung einer ersten Getriebeeingangswelle (2) mit einem Antrieb (4 bzw. 5), insbesondere mit einer Verbrennungskraftmaschine (4) und/oder mit einer Elektromaschine (5), und die zweite Trennkupplung (K2) zur Kopplung oder Entkopplung einer zweiten Getriebeeingangswelle (3) mit einem Antrieb (4 bzw. 5), insbesondere mit einer Verbrennungskraftmaschine (4) und/oder mit einer Elektromaschine (5), vorgesehen ist, wobei die erste und zweite Trennkupplung (K1, K2) als Lamellenkupplung ausgeführt sind und einen Innen- (6, 7) und Außenlamellenträger (8a, 8b) aufweisen, wobei die dritte Trennkupplung (K0) zur Kopplung oder Entkopplung des Außenlamellenträgers (8a, 8b) der ersten und zweiten Trennkupplung (K1, K2) mit einem Antrieb (4 bzw. 5), insbesondere mit einer Verbrennungskraftmaschine (4) und/oder mit einer Elektromaschine (5), vorgesehen ist, wobei die dritte Trennkupplung (K0) als Lamellenkupplung ausgebildet ist und einen Innen- (9) und Außenlamellenträger (8c) aufweist und wobei der Außenlamellenträger (8a, 8b, 8c) der ersten, der zweiten und der dritten Trennkupplung (K1, K2, K0) als ein gemeinsamer Außenlamellenträger (8) zur Aufnahme, Lagerung und/oder Führung der Außenlamellen (10, 11, 12) der ersten, zweiten und dritten Trennkupplung (K1, K2, K0) ausgebildet ist, **dadurch gekennzeichnet, dass** die erste, zweite und dritte Trennkupplung K1, K2, K0) im Wesentlichen hintereinanderliegend angeordnet sind, wobei die mittlere Trennkupplung, insbesondere die erste Trennkupplung (K1), durch einen Betätigungskolben (18) betätigbar ist, der zumindest teilweise innerhalb des Innenlamellenträgers (7) einer benachbarten Trennkupplung, insbesondere der zweiten Trennkupplung (K2), gelagert und/oder geführt ist und dass der Betätigungskolben (18) eine Doppellagerung aufweist, so dass eine auf den Betätigungskolben (18) durch die erste und zweite Trennkupplung (K1, K2) einwirkende Drehbewegung voneinander entkoppelt sind.

2. Mehrfach-Kupplung nach dem vorhergehenden Anspruch, **dadurch gekennzeichnet, dass** der gemeinsame Außenlamellenträger (8) eine durchgängige Verzahnung aufweist, insbesondere am Innenumfang im Wesentlichen über die Länge des Außenlamellenträgers (8) durchgehende Axialnuten vorgesehen sind.

3. Mehrfach-Kupplung nach einem der Ansprüche 1 oder 2, **dadurch gekennzeichnet, dass** die Außenlamellen (10, 11, 12) der ersten, der zweiten und der dritten Trennkupplung (K1, K2, K0) im Wesentlichen gleich ausgebildet und/oder gleich dimensioniert ausgeführt sind.

4. Mehrfach-Kupplung nach einem der Ansprüche 1 bis 3, **dadurch gekennzeichnet, dass** die erste, zweite und dritte Trennkupplung (K1, K2, K0) jeweils einen separaten Innenlamellenträger (6, 7, 9) aufweisen, wobei die Verzahnungen der Innenlamellenträger (6, 7, 9) im Wesentlichen gleich ausgebildet und/oder gleich dimensioniert sind, so dass im Wesentlichen auch die Innenlamellen (13, 14, 15) der ersten, der zweiten und der dritten Trennkupplung (K1, K2, K0) im Wesentlichen gleich ausgebildet und/oder gleich dimensioniert ausgeführt sind.

5. Mehrfach-Kupplung nach einem der Ansprüche 1 bis 4, **dadurch gekennzeichnet, dass** zwischen den Lamellen, insbesondere den Außenlamellen (10, 11, 12) der ersten, zweiten, und/oder dritten Trennkupplung (K1, K2, K0) Federelemente (16) vorgesehen sind, insbesondere wobei die Federelemente (16) der ersten, zweiten und/oder dritten Trennkupplung (K1, K2, K0) im Wesentlichen gleich ausgebildet und/oder gleich dimensioniert sind.

6. Mehrfach-Kupplung nach einem der Ansprüche 1 bis 5, **dadurch gekennzeichnet, dass** für jede Trennkupplung, nämlich für die erste, zweite und dritte Trennkupplung (K1, K2, K0) eine Kühlölzuführung (17) vorgesehen ist, insbesondere für jede Trennkupplung (K1, K2, K0) eine separat ausgebildete Kühlölzuführung (17a, 17b, 17c) vorgesehen bzw. realisiert ist.

7. Mehrfach-Kupplung nach einem der Ansprüche 1 bis 6, **dadurch gekennzeichnet, dass** der gemeinsame Außenlamellenträger (8) als Rotorträger (21) ausgebildet ist und mit dem Rotor einer Elektromaschine (5) wirksam verbunden oder verbindbar ist, wobei eine Antriebswelle (4a) einer Verbrennungskraftmaschine (4) mit dem Innenlamellenträger (9) der dritten Trennkupplung (K0) wirksam verbunden oder verbindbar ist.

8. Mehrfach-Kupplung nach einem der Ansprüche 1 bis 7, **dadurch gekennzeichnet, dass** die erste und zweite Trennkupplung (K1, K2) durch einen Betätigungskolben (18, 22) von der einen Seite des Außenlamellenträgers (8) und die dritte Trennkupplung (K0) durch einen Betätigungskolben (23) von der anderen Seite des Außenlamellenträgers (8) betätigbar ist.

## Claims

1. Multiple clutch (1) for a motor vehicle, in particular for a hybrid drive of a motor vehicle, having at least one first, one second and one third separating clutch (K1, K2, K0), wherein the first separating clutch (K1) is provided for coupling or decoupling a first transmission input shaft (2) with a drive (4 or 5), in particular with an internal combustion engine (4) and/or an electric machine (5), and the second separating clutch (K2) is provided for coupling or decoupling a second transmission input shaft (3) with a drive (4 or 5), in particular with an internal combustion engine (4) and/or with an electric machine (5), wherein the first and second clutches (K1, K2) are configured as a disk clutch and have an inner (6, 7) and outer disc carrier (8a, 8b), wherein the third separating clutch (K0) is provided for coupling or decoupling the outer disc carrier (8a, 8b) of the first and second separating clutches (K1, K2) with a drive (4 or 5), in particular with an internal combustion engine (4) and/or an electric machine (5), wherein the third separating clutch (K0) is configured as a multi-plate clutch and an inner (9) and outer disc carrier (8c), and wherein the outer disc carrier (8a, 8b, 8c) of the first, the second and the third separating clutches (K1, K2, K0) is configured as a common outer disc carrier (8) for bearing and/or guiding the outer clutch discs (10, 11, 12) of the first, second and third separating clutches (K1, K2, K0), **characterized in that** the first, second and third separating clutches (K1, K2, K0) are arranged essentially one behind the other, wherein the middle separating clutch, in particular the first separating clutch (K1), can be actuated by an actuating piston (18) that is at least partially borne and/or guided within of the outer disc carrier (7) of an adjacent separating clutch, in particular of the second separating clutch (K2), and that the actuating piston (18) has a double bearing so that a rotary motion acting on the actuating piston (18) through the first and second clutches (K1, K2) applied are decoupled from each other.

2. Multiple clutch according to the preceding claim, **characterized in that** the common outer disc carrier (8) has a continuous toothing, in particular axial grooves are provided in the inner circumference essentially continuously over the length of the outer disk carrier (8).

3. Multiple clutch according to one of claims 1 and 2, **characterized in that** the outer clutch discs (10, 11, 12) of the first, second and third separating clutches (K1, K2, K0) are of essentially the same design and/or have the same dimensions.

4. Multiple clutch according to one of claims 1 to 3, **characterized in that** the first, second and third separating clutches (K1, K2, K0) each have a separate inner disc carrier (6, 7, 9), wherein the teeth of the inner disc carrier (6, 7, 9) are of essentially the same design and/or have the same dimensions so that essentially, the inner clutch discs (13, 14, 15) of the first, second and third separating clutches (K1, K2, K0) are also of essentially the same design and/or have the same dimensions.

5. Multiple clutch according to one of claims 1 to 4, **characterized in that** spring elements (16) are provided between the clutch discs, in particular the outer clutch discs (10, 11, 12) of the first, second and/or third separating clutches (K1, K2, K0), in particular wherein the spring elements (16) of the first, second and/or third separating clutches (K1, K2, K0) are also of essentially the same design and/or have the same dimensions.

6. Multiple clutch according to one of claims 1 to 5, **characterized in that** a cooling oil supply (17) is provided for each separating clutch, namely for the first, second and third separating clutches (K1, K2, K0), in particular a separately formed cooling oil supply (17a, 17b, 17c) is provided or realized for each separating clutch (K1, K2, K0).

7. Multiple clutch according to one of claims 1 to 6, **characterized in that** the outer disc carrier (8) is designed as a rotor carrier (21) and is operatively connected or connectable to the rotor of an electric machine (5), wherein a drive shaft (4a) of an internal combustion engine (4) is operatively connected or connectable to the inner disk carrier (9) of the third separating clutch (K0).

8. Multiple clutch according to one of claims 1 to 7, **characterized in that** the first and second separating clutches (K1, K2) can be actuated by an actuating piston (18, 22) from one side of the outer disk carrier (8), and the third separating clutch (K0) can be actuated by an actuating piston (23) from the other side of the outer disk carrier (8).

## Revendications

1. Embrayage multiple (1) pour un véhicule automobile, en particulier pour une propulsion hybride d'un véhicule automobile, comprenant au moins un premier, un deuxième et un troisième embrayage de séparation (K1, K2, K0), le premier embrayage de séparation (K1) étant conçu pour l'accouplement ou le désaccouplement entre un premier arbre d'entrée de transmission (2) et un entraînement (4 ou 5), en particulier un moteur à combustion interne (4) et/ou une machine électrique (5) et le deuxième embrayage de séparation (K2) étant conçu pour l'accouplement ou le désaccouplement entre un deuxième arbre d'entrée de transmission (3) et un entraînement (4 ou 5), en particulier un moteur à combustion interne (4) et/ou une machine électrique (5), le premier et le deuxième embrayage de séparation (K1, K2) étant réalisés sous la forme d'un embrayage à disques et comprenant un porte-disques intérieur (6, 7) et un porte-disques extérieur (8a, 8b), le troisième embrayage de séparation (K0) étant conçu pour l'accouplement ou le désaccouplement entre le porte-disques extérieur (8a, 8b) du premier et du deuxième embrayage de séparation (K1, K2) et un entraînement (4 ou 5), en particulier un moteur à combustion interne (4) et/ou une machine électrique (5), le troisième embrayage de séparation (K0) étant réalisé sous la forme d'un embrayage à disques et comprenant un porte-disques intérieur (9) et un porte-disques extérieur (8c) et le porte-disques extérieur (8a, 8b, 8c) du premier, du deuxième et du troisième embrayage de séparation (K1, K2, K0) étant réalisé sous la forme d'un porte-disques extérieur commun (8) servant à recevoir, supporter et/ou guider les disques extérieurs (10, 11, 12) du premier, du deuxième et du troisième embrayage de séparation (K1, K2, K0), **caractérisé en ce que** le premier, le deuxième et le troisième embrayage de séparation K1, K2, K0) sont disposés essentiellement l'un derrière l'autre, l'embrayage de séparation intermédiaire, en particulier le premier embrayage de séparation (K1), pouvant être actionné par un piston d'actionnement (18), qui est placé et/ou guidé au moins partiellement à l'intérieur du porte-disques intérieur (7) d'un embrayage de séparation adjacent, en particulier le deuxième embrayage de séparation (K2) et **en ce que** le piston d'actionnement (18) présente un palier double, de sorte qu'un mouvement rotatif agissant sur les pistons d'actionnement (18) par l'intermédiaire du premier et du deuxième embrayage de séparation (K1, K2) soient désaccouplés l'un de l'autre.

2. Embrayage multiple selon la revendication précédente, **caractérisé en ce que** le porte-disques extérieur commun (8) présente une denture continue, en particulier, des rainures axiales continues sont prévues au niveau de la périphérie interne, essentiellement sur la longueur du porte-disques extérieur (8).

3. Embrayage multiple selon l'une quelconque des revendications 1 ou 2, **caractérisé en ce que** les disques extérieurs (10, 11, 12) du premier, du deuxième et du troisième embrayage de séparation (K1, K2, K0) sont conçus essentiellement identiques et/ou sont réalisés avec des dimensions identiques.

4. Embrayage multiple selon l'une quelconque des revendications 1 à 3, **caractérisé en ce que** le premier, le deuxième et le troisième embrayage de séparation (K1, K2, K0) présentent respectivement un porte-disques intérieur séparé (6, 7, 9), les dentures des porte-disques intérieurs (6, 7, 9) étant conçues et/ou dimensionnées essentiellement identiques, de sorte que, essentiellement, les lamelles intérieures (13, 14, 15) du premier, du deuxième et du troisième embrayage de séparation (K1, K2, K0) soient essentiellement conçues identiques et/ou réalisées avec des dimensions identiques.

5. Embrayage multiple selon l'une quelconque des revendications 1 à 4, **caractérisé en ce que,** entre les disques, en particulier les disques extérieurs (10, 11, 12) du premier, du deuxième et/ou du troisième embrayage de séparation (K1, K2, K0), des éléments à ressort (16) sont prévus, en particulier, les éléments à ressort (16) du premier, du deuxième et/ou du troisième embrayage de séparation (K1, K2, K0) étant essentiellement conçus identiques et/ou de dimensions identiques.

6. Embrayage multiple selon l'une quelconque des revendications 1 à 5, **caractérisé en ce que** pour chaque embrayage de séparation, à savoir pour le premier, le deuxième et le troisième embrayage de séparation (K1, K2, K0), une alimentation en huile de refroidissement (17) est prévue, en particulier pour chaque embrayage de séparation (K1, K2, K0), une alimentation en huile de refroidissement (17a, 17b, 17c) conçue séparée est prévue ou réalisée.

7. Embrayage multiple selon l'une quelconque des revendications 1 à 6, **caractérisé en ce que** le porte-disques extérieur commun (8) est conçu sous la forme d'un porte-rotor (21) et est relié ou peut être relié de manière active au rotor d'une machine électrique (5), un arbre d'entraînement (4a) d'un moteur à combustion interne (4) étant relié ou pouvant être relié de manière active au porte-disques intérieur (9) du troisième embrayage de séparation (K0).

8. Embrayage multiple selon l'une quelconque des revendications 1 à 7, **caractérisé en ce que** le premier et le deuxième embrayage de séparation (K1, K2) peuvent être actionnés par un piston d'actionnement (18, 22) depuis le premier côté du porte-disques extérieur (8) et le troisième embrayage de séparation (K0) peut être actionné par un piston d'actionnement (23) depuis l'autre côté du porte-disques extérieur (8).
